(19) Europäisches Patentamt / European Patent Office / Office européen des brevets

(11) **EP 4 012 934 B1**

(12) **EUROPEAN PATENT SPECIFICATION**

(45) Date of publication and mention of the grant of the patent:
**30.07.2025  Bulletin 2025/31**

(21) Application number: **20852418.1**

(22) Date of filing: **23.04.2020**

(51) International Patent Classification (IPC):
**H04B 3/23** (2006.01)    **H04B 3/20** (2006.01)

(52) Cooperative Patent Classification (CPC):
**H04M 9/082; H04B 1/10; H04B 3/23; H04M 11/062;**
H04B 1/38; H04B 3/03

(86) International application number:
**PCT/CN2020/086395**

(87) International publication number:
**WO 2021/027316 (18.02.2021 Gazette 2021/07)**

(54) **NOISE SIGNAL PROCESSING DEVICE AND METHOD**

RAUSCHSIGNALVERARBEITUNGSVORRICHTUNG UND -VERFAHREN

DISPOSITIF ET PROCÉDÉ DE TRAITEMENT DE SIGNAL DE BRUIT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2019  CN 201910754724**

(43) Date of publication of application:
**15.06.2022  Bulletin 2022/24**

(73) Proprietor: **Huawei Technologies Co., Ltd.**
**Longgang District**
**Shenzhen,**
**Guangdong 518129 (CN)**

(72) Inventors:
• **ZHAO, Zhilei**
**Shenzhen, Guangdong 518129 (CN)**
• **LI, Ying**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 3 185 429          CN-A- 1 671 161
CN-A- 101 425 824        CN-A- 101 860 376
CN-A- 103 095 351        CN-A- 106 330 801
US-A1- 2003 118 177      US-A1- 2004 184 519
US-B1- 6 856 684

## Description

This application claims priority to Chinese Patent Application No. 201910754724.8, filed with the China National Intellectual Property Administration on August 15, 2019 and entitled "NOISE SIGNAL PROCESSING APPARATUS AND METHOD".

## TECHNICAL FIELD

This application relates to the field of wireless communications, and in particular, to a noise signal processing apparatus and method.

## BACKGROUND

A digital subscriber line (Digital Subscriber Line, DSL) is a technology for performing data transmission on a pair of twisted pairs. Specifically, the digital subscriber line includes technologies such as an asymmetric digital subscriber line (Asymmetric Digital Subscriber Line, ADSL) technology, an ADSL2+ technology, a very high speed digital subscriber line (Very High Speed DSL, VDSL) 2 technology, a G.fast technology, and a V35b technology.

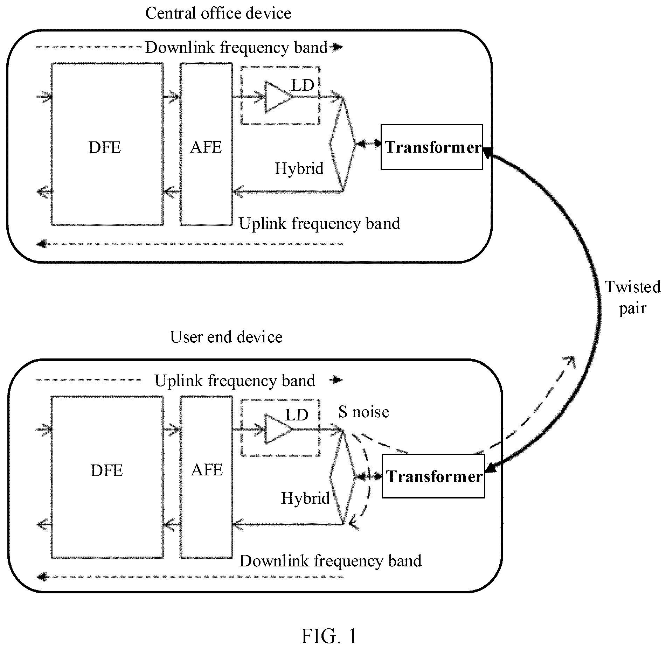

FIG. 1 is a schematic diagram of performing data transmission by using a DSL technology. There is a communications system that includes a central office device and a user end device. The central office device and the user end device are connected by using a twisted pair, and transmit data on the twisted pair by using a DSL protocol. Further, each of the central office device and the user end device includes the following unit modules: a digital front end (Digital Front End, DFE), an analog front end (Analog Front End, AFE), a line driver (Line Driver, LD), a hybrid (Hybrid, H) circuit, and the like.

Bidirectional data transmission may be performed between the central office device and the user end device. When the DSL technology is used for data transmission, an uplink frequency band and a downlink frequency band need to be obtained through division in a frequency division duplex (Frequency Division Duplex, FDD) manner. Usually, data transmission from the central office device to the user end device is referred to as downlink transmission, a signal sent by the central office device to the user end device is referred to as a downlink signal, and a frequency range used for downlink transmission may be referred to as the downlink frequency band. Conversely, data transmission from the user end device to the central office device is referred to as uplink transmission, a signal sent by the user end device to the central office device is referred to as an uplink signal, and a frequency range used for uplink transmission may be referred to as the uplink frequency band.

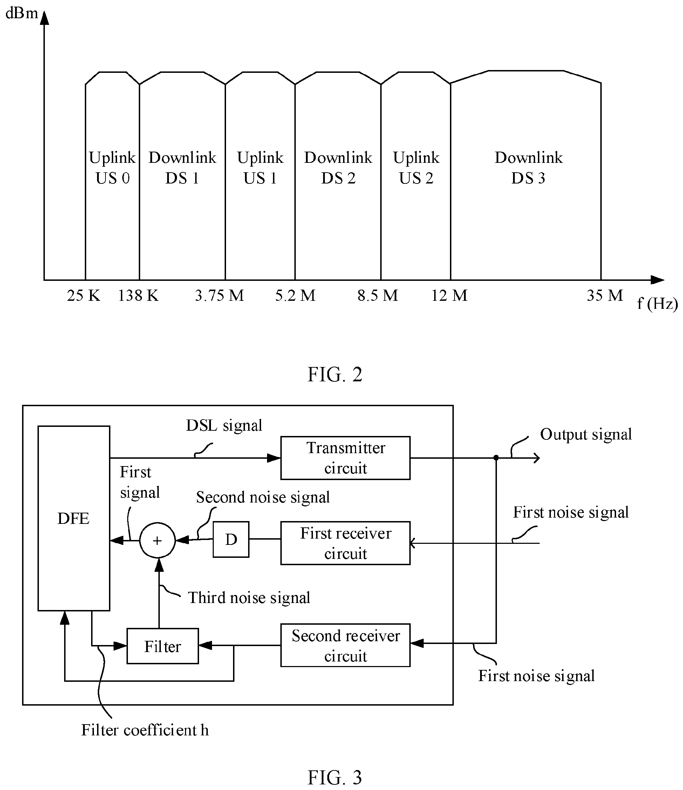

For example, in a V35b technology, division into an uplink frequency band and a downlink frequency band is shown in FIG. 2. There are three uplink frequency bands and three downlink frequency bands. The uplink frequency band is used to transmit an uplink data stream (up stream, US), and the corresponding frequency bands are denoted as a US 0, a US 1, and a US 2. The downlink frequency band is used to transmit a downlink data stream (down stream, DS), and the corresponding frequency bands are denoted as a DS 1, a DS 2, and a DS 3. Signals at the uplink frequency band and the downlink frequency band may be simultaneously used to transmit data, and the uplink frequency bands alternate with the downlink frequency bands. When the user end device sends an uplink signal at the US 0, the US 1, or the US 2, a series of noises such as a quantization noise, a thermal noise, and a nonlinear noise are generated due to a non-ideal environment of a transmit channel of an AFE in the user end device and a characteristic of an LD. These noises pass through a hybrid circuit, and return to a receiving side of the AFE in the user end device. Consequently, receiving performance of the downlink frequency bands DS 1, DS 2, and DS 3 is affected.

Manners of obtaining the uplink frequency band and the downlink frequency band through division are basically compatible in technologies such as an ADSL technology, an ADSL2+ technology, a VDSL2 technology, and the V35b technology. Therefore, in the ADSL2+ technology, there is an uplink frequency band US 0 that ranges from 25 kHz to 138 kHz, and there is only a downlink frequency band DS 1 that ranges from 138 kHz to 2.2 MHz. Similarly, when the user end device sends an uplink signal at the US 0, the AFE and the LD generate an out-of-band noise at a frequency band above the US 0. The noise passes through the hybrid circuit, and returns to the receiving side. The noise is at a same frequency band as a signal at the DS 1, and performance of the DS 1 is consequently affected. In the VDSL2 technology, when there is a relatively long distance for a twisted pair loop, when only frequency bands US 0 and DS 1 are available due to an attenuation characteristic of a cable, there is also an out-of-band noise, which is the same as the problem in the ADSL2+ technology.

EP 3 185 429 A1 discloses technologies related to an implementation of a system to measure and compensate nonlinearity (e.g., echo cancellation) in a transceiver circuitry of a device. Particularly, the echo cancellation utilizes reduced number of components for power savings, and further increases efficiency of signal or data packet transmissions in the device. An echo signal is determined by sampling a power amplifier output signal. The output signal is split into signals with different delays. Down conversion and digital interpolation of the signal with the shortest delay is performed. An echo cancellation signal is calculated based on the output signal as received as an input signal to a receive chain. The calculated signal is subtracted from a received echo signal to generate an echo free signal.

US 6 856 684 B1 discloses a method and device for echo compensation with a common-frequency transmission method in duplex mode over a two-wire line, an echo compensation filter which has adjustable coefficients and is embodied as an FIR filter being arranged between the transmitter output and receiver input and an IIR filter with adjustable coefficients, whose coefficients can be determined as a function of the coefficients of the FIR filter, being additionally provided.

## SUMMARY

Technical solutions in embodiments of this application are used to eliminate an out-of-band noise at a frequency band above a frequency band US 0. To resolve this technical problem, the embodiments of this application provide the following technical solutions:

According to a first aspect, an embodiment of this application provides a noise signal processing apparatus of claim 1. The apparatus includes a digital front end DFE, a transmitter circuit, and a first receiver circuit. The transmitter circuit is configured to: receive a signal from the DFE, process and amplify the signal, and output the signal. The output signal includes a first noise signal, and the first noise signal flows into the first receiver circuit.

In addition, the apparatus further includes a second receiver circuit, a filter module, an adder module, and a delay module. Further, the first receiver circuit is connected to the DFE by using the delay module and the adder module. The first noise signal is processed by the first receiver circuit and the delay module to obtain a second noise signal. The second receiver circuit is connected to an output end of the transmitter circuit, and is configured to: receive the first noise signal output by the transmitter circuit, and send the first noise signal to the filter module. The filter module is connected to the DFE and the second receiver circuit, and is configured to: receive a filter coefficient sent by the DFE, and perform, by using the filter coefficient, filtering processing on the first noise signal received by the second receiver circuit, to obtain a third noise signal. The adder module is connected to both the delay module and the filter module, and is configured to: add the received second noise signal and the received third noise signal to obtain a first signal, and send the first signal to the DFE.

According to the apparatus provided in this aspect, the second receiver circuit is added to collect a noise signal leaked from the transmitter circuit, the filter module performs filtering processing on the noise signal based on the filter coefficient, and a noise signal obtained after filtering processing and a noise collected by the first receiver circuit in the adder module are added, to cancel a noise in the first receiver circuit. In this way, an out-of-band noise is prevented from affecting downlink transmission performance. In addition, according to the apparatus that implements noise cancellation by using an echo in this embodiment, a downlink service rate is increased.

With reference to the first aspect, the transmitter circuit includes a digital-to-analog converter DAC, a programmable gain amplifier PGA, and a line driver LD, and the first noise signal is generated after a DSL signal output from the DFE sequentially passes through the PGA and the LD.

With reference to the first aspect, the apparatus further includes a first high-pass filter HPF 1, a second high-pass filter HPF 2, and a hybrid circuit H. The hybrid circuit H is disposed between the LD and the HPF 1, and is configured to send, to the HPF 1, the first noise signal output by the LD. An input end of the HPF 1 is connected to the hybrid circuit H, and an output end is connected to the first receiver circuit. An input end of the HPF 2 is connected to the LD, and an output end is connected to the second receiver circuit. In this implementation, the HPF 1 is disposed to filter and suppress a signal transmitted at a US 0, to implement more accurate noise collection at a frequency band DS 1.

With reference to the first aspect, in still another possible implementation of the first aspect, the DFE determines the filter coefficient based on a signal output by the first receiver circuit and a signal output by the second receiver circuit, and sends filtering information to the filter module. The filtering information includes the filter coefficient. In this implementation, the digital front end DFE determines the filter coefficient by using the signals sent by the first receiver circuit and the second receiver circuit, to prepare for canceling the first noise signal.

With reference to the first aspect, in still another possible implementation of the first aspect, the second noise signal is denoted as $S_{N2}$, the third noise signal is denoted as $S_{N3}$, $S_{N3} = s * h_{\_Filter}$, a signal obtained after the first noise signal $S_{N1}$ is processed by the second receiver circuit is denoted as $S$, the filter coefficient is denoted as $h_{\_Filter}$, and the first signal output by the adder module is denoted as y. Specifically, $y = s_{N2} + s_{N3} = s_{N2} + s * h_{\_Filter} = 0$.

With reference to the first aspect, the apparatus further includes a transformer TF and a switching module. One end of the TF is connected to the hybrid circuit H. The switching module is connected between the HPF 2 and the second receiver circuit, and is configured to perform switching to collect the first noise signal output by the LD or a common mode noise collected by the TF on a twisted pair.

In this implementation, the switching module such as a switch selection circuit is added to a channel of the second receiver circuit RX 2, so that when there is an ADSL mode or a VD long-distance mode, the switch selection circuit performs switching to collect a signal output by the LD and train the filter coefficient, to cancel impact of a noise output by the LD on performance of a receiver circuit RX; and when there is another mode, the switch selection circuit performs switching to another channel to collect a common mode signal collected by the transformer, to cancel impact of a common mode noise on a cable on the performance of the receiver circuit RX.

According to a second aspect, an embodiment further provides a noise signal processing method of claim 4. The method is applied to a noise signal processing apparatus, and the apparatus includes a digital front end DFE, a transmitter circuit, and a first receiver circuit. The transmitter circuit is configured to: receive a signal from the DFE, process and amplify the signal, and output the signal. The output signal includes a first noise signal, and the first noise signal flows into the first receiver circuit. The apparatus further includes a second receiver circuit.

Specifically, the method includes: The first receiver circuit receives the first noise signal, and performs delay processing on the first noise signal to generate a second noise signal; the second receiver circuit receives the first noise signal output by the transmitter circuit, and performs filtering processing on the first noise signal to obtain a third noise signal, where a filter coefficient used in the filtering processing is sent by the DFE; and the second noise signal and the third noise signal are added to obtain a first signal, and the first signal is sent to the DFE.

With reference to the second aspect, the noise signal processing apparatus further includes a digital-to-analog converter DAC, a programmable gain amplifier PGA, and a line driver LD, and the method further includes: The LD receives a signal output by the PGA, and amplifies the signal to generate the first noise signal. The signal output by the PGA is output after being sequentially processed by the DAC and the PGA.

With reference to the second aspect, the apparatus further includes a first high-pass filter HPF 1, a second high-pass filter HPF 2, and a hybrid circuit H, and the method further includes: The hybrid circuit H sends, to the HPF 1, the first noise signal output by the LD; the HPF 1 performs high-pass filtering on the first noise signal, and outputs the first noise signal to the first receiver circuit; and the HPF 2 receives the first noise signal, performs high-pass filtering on the first noise signal, and outputs the first noise signal to the second receiver circuit.

With reference to the second aspect, in still another possible implementation of the second aspect, the method further includes: The DFE determines the filter coefficient based on a signal output by the first receiver circuit and a signal output by the second receiver circuit, and sends the filter coefficient.

Optionally, the DFE sends the filter coefficient to a filter module.

With reference to the second aspect, in still another possible implementation of the second aspect, the obtaining a first signal includes: The second noise signal and the third noise signal are added by using the following expression to obtain the first signal:

$$ y = s_{N2} + s_{N3} = s_{N2} + s * h_{\_Filter} = 0 , $$

where

the first signal is denoted as y, the second noise signal is denoted as $s_{N2}$, the third noise signal is denoted as $s_{N3}$, $s_{N3} = s * h_{\_Filter}$, a signal obtained after the first noise signal $s_{N1}$ is processed by the second receiver circuit is denoted as $s$, and the filter coefficient is denoted as $h_{\_Filter}$.

With reference to the second aspect, the apparatus further includes a transformer TF and a switching module, and one end of the TF is connected to the hybrid circuit H; and the method further includes: The switching module performs switching to collect the first noise signal output by the LD or a common mode noise collected by the TF on a twisted pair.

According to a third aspect, an embodiment of this application further provides a communications apparatus of claim 7, including a processor. The processor is coupled to a memory. The memory is configured to store instructions. The processor is configured to execute the instructions in the memory, so that the communications apparatus performs the method according to the second aspect and the implementations of the second aspect.

According to the apparatus provided in the embodiments of this application, the second receiver circuit is added to collect a noise signal leaked from the transmitter circuit, the filter module performs filtering processing on the noise signal based on the filter coefficient, and a noise signal obtained after filtering processing and a noise collected by the first receiver circuit in the adder module are added, to cancel a noise in the first receiver circuit. In this way, an out-of-band noise is prevented from affecting downlink transmission performance. In addition, according to the method in which noise cancellation is implemented by using an echo in the embodiments, a downlink service rate is increased.

**BRIEF DESCRIPTION OF DRAWINGS**

FIG. 1 is a schematic diagram of performing data transmission by using a DSL technology according to this application;
FIG. 2 is a schematic diagram of division into an uplink frequency band and a downlink frequency band according to this application;
FIG. 3 is a schematic diagram of a structure of a noise signal processing apparatus according to an embodiment of this application;
FIG. 4 is another schematic diagram of a structure of a noise signal processing apparatus according to an embodiment of this application;
FIG. 5 is still another schematic diagram of a structure of a noise signal processing apparatus according to an embodiment of this application;
FIG. 6 is still another schematic diagram of a structure of a noise signal processing apparatus according to an embodiment of this application; and

FIG. 7 is a schematic diagram of a structure of a communications apparatus according to an embodiment of this application.

## DESCRIPTION OF EMBODIMENTS

To enable a person skilled in the art to better understand technical solutions in embodiments in this application, and to make objectives, features, and advantages of the embodiments in this application clearer and more comprehensible, the following further describes the technical solutions of the embodiments in this application in detail with reference to the accompanying drawings.

Before the technical solutions of the embodiments of this application are described, an application scenario of the embodiments of this application is first described with reference to the accompanying drawings.

The technical solutions in this application may be applied to a communications system that includes at least one central office device and at least one user end device, for example, a DSL system, a gigabit home networking (Gigabit home networking, G.hn) system, a power line communication (power line communication, PLC) system, or a data over cable service interface specifications (Data Over Cable Service Interface Specifications, DOCSIS) system. Processing may be performed by using the technical solutions provided that there is a noise generated due to crosstalk between lines.

Further, the DSL system includes at least one central office device, and each central office device is connected to at least one user end device by using a twisted pair. Correspondingly, in the G.hn system, the PLC system, and the DOCSIS system, the central office device is connected to the user end device by using transmission media such as Ethernet, a power line, and a coaxial cable respectively.

Specifically, the following provides description by using the DSL system as an example. The central office device may be a digital subscriber line access multiplexer (digital subscriber line access multiplexer, DSLAM) or another device into which a DSL access service function unit is integrated. The user end device may be a DSL modem (modem) or a device on a user side, for example, a router or a set-top box into which a DSL modem function is integrated.

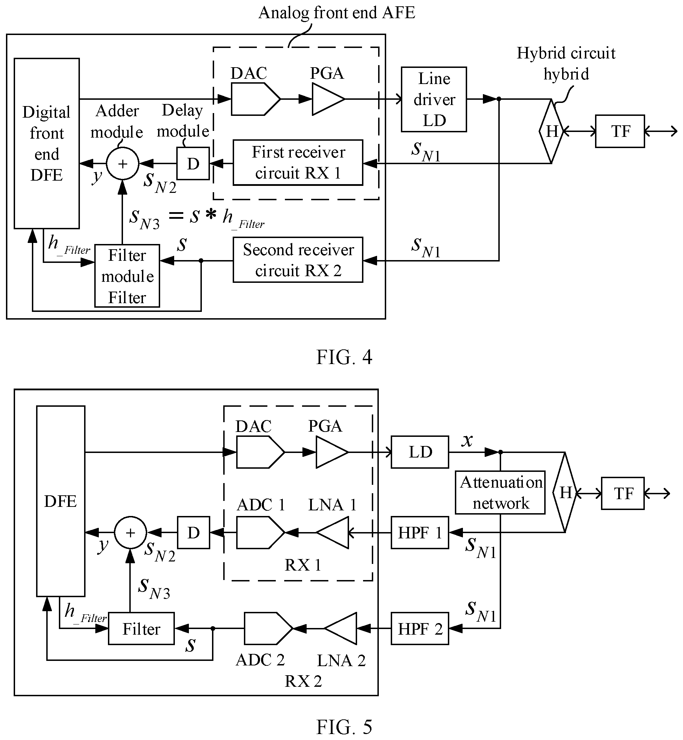

The central office device and the user end device are equivalent in terms of structures and working principles involved in implementing a manner in the present invention, in other words, need to perform same processing. Specifically, FIG. 3 is a schematic diagram of a structure of an end device. The end device may be a central office device or a user end device. Further, the end device includes a digital front end (Digital Front End, DFE) and an analog front end (Analog Front End, AFE). In addition, as shown in FIG. 4, the end device further includes a line driver (Line Driver, LD), a hybrid (Hybrid, H) circuit, a transformer (transformer, TF), and the like.

In a signal sending direction, the DFE is configured to implement a function of modulating/demodulation and encoding/decoding a digital subscriber line (Digital Subscriber Line, DSL) signal. The AFE includes a transmitter circuit and a first receiver circuit RX 1. Further, the transmitter circuit may include a digital-to-analog converter (digital-to-analog converter, DAC) and a programmable gain amplifier (Programmable Gain Amplifier, PGA). After receiving a signal (for example, a DSL signal or an xDSL signal) from the DFE, the DAC performs digital-to-analog conversion on the signal, then transmits a converted signal to the PGA for gain amplification, and finally transmits an amplified signal to the LD.

The LD is mainly configured to: amplify an analog signal generated by the transmitter circuit, and drive the signal to a line for transmission.

The hybrid circuit, an H circuit for short, is connected between the PGA of the transmitter circuit and the first receiver circuit RX 1, and is configured to implement a two-to-four wire conversion function, that is, isolate a transmit signal from a received signal. Specifically, the hybrid circuit is mainly configured to implement the following functions:

1. Transmit a transmit signal output by the LD to a line, so that transmission can be performed by using a twisted pair.
2. Receive a signal transmitted by a peer end device of the line, and send the received signal to the first receiver circuit RX 1.
3. Suppress the transmit signal from the LD from being transmitted to an LNA of the first receiver circuit.

The first receiver circuit RX 1 may include the LNA and an ADC.

The transformer TF is configured to implement functions of common mode rejection, high-pass filtering, protection, and the like.

In a signal receiving direction, the first receiver circuit RX 1 includes the low noise amplifier (Low Noise Amplifier, LNA) and the analog-to-digital converter (digital-to-analog converter, ADC). Further, the LNA is configured to: receive a signal that passes through the hybrid circuit and that is from a peer end, and transmit the signal to the ADC. The ADC is configured to: perform analog-to-digital conversion on the received signal, and output the signal to the DFE. Optionally, a gain configurable function is usually integrated into the LNA.

A method provided in the embodiments is used to eliminate an out-of-band noise above a frequency band US 0. The noise mainly includes the following two parts: One part is a noise output after a digital subscriber line DSL signal is transmitted from the DAC to the PGA in the transmitter circuit, and the other part of noise is a noise generated by the LD. It should be noted that a noise in the embodiments of this application generally refers to a sum of the two parts of noises, and in the following embodiments, if it is not specifically noted, suppression and elimination of a noise are suppression and elimination of a total noise (namely, the sum of the two parts of noises) output from the LD. The noise is referred to as a first noise signal in the embodiments, and may be denoted as $s_{N1}$.

The following describes the technical solutions of this application in detail.

In the technical solutions provided in this application, a receiver circuit such as a second receiver circuit RX 2 is added in addition to each end device. The second receiver circuit RX 2 is configured to receive a transmit (TX for short) signal output from an LD. The TX signal is filtered by a high-pass filter (High-Pass Filter, HPF) to suppress a signal transmitted at a US 0, to implement more accurate noise collection at a frequency band DS 1.

A DFE calculates a filter coefficient based on collected noise data and a received signal, so that a noise signal obtained after a collected noise is processed by a filter module (Filter) and an original noise in a receive channel cancel each other, to eliminate an out-of-band noise and improve performance of a receive link.

As shown in FIG. 3, an embodiment provides a schematic diagram of a structure of a noise signal processing apparatus. The apparatus may be a central office device or a user end device. This is not limited in this embodiment.

Specifically, the apparatus includes a DFE, a transmitter circuit, and a first receiver circuit RX 1. In addition, the apparatus further includes a second receiver circuit RX 2, a filter module filter, an adder module "+", a delay module (Delay, D), and the like.

The transmitter circuit is configured to: receive a signal from the DFE, process and amplify the signal, and output the signal. The output signal includes a first noise signal, and the first noise signal flows into the first receiver circuit. Optionally, the signal from the DFE is a DSL signal.

The first receiver circuit receives the first noise signal, and processes the first noise signal. The first noise signal sequentially passes through the delay module and the adder module, and finally flows into the DFE. The first noise signal is processed by the first receiver circuit and the delay module to obtain a second noise signal.

The second receiver circuit is connected to an output end of the transmitter circuit, and is configured to: receive the first noise signal output by the transmitter circuit, and send the first noise signal to the filter module.

The filter module is connected to the DFE and the second receiver circuit, and is configured to: receive a filter coefficient sent by the DFE, and perform, by using the filter coefficient, filtering processing on the first noise signal received by the second receiver circuit, to obtain a third noise signal.

The adder module is connected to both the delay module and the filter module, and is configured to: add the received second noise signal and the received third noise signal to obtain a first signal, and send the first signal to the DFE.

Optionally, as shown in FIG. 4, the transmitter circuit includes a digital-to-analog converter DAC, a programmable gain amplifier PGA, and a line driver LD. An output signal is generated after the DSL signal or an xDSL signal output from the DFE sequentially passes through the PGA and the LD. A part of the output signal flows into the first receiver circuit through the hybrid circuit, and the signal flowing into the first receiver circuit is referred to as the first noise signal.

Further, as shown in FIG. 5, the apparatus further includes a first high-pass filter HPF 1 and a second high-pass filter HPF 2. The hybrid circuit H is disposed between the LD and the HPF 1, and is configured to send, to the HPF 1, the first noise signal output by the LD. An input end of the HPF 1 is connected to the hybrid circuit H, and an output end is connected to an LNA 1 of the first receiver circuit. That is, the HPF 1 is disposed between the first receiver circuit RX 1 and the hybrid circuit H, and is configured to perform filtering processing on the first noise signal output by the hybrid circuit H, and input the first noise signal to the first receiver circuit RX 1.

In this embodiment, the HPF 1 is disposed to filter and suppress a signal transmitted at a US 0, to implement more accurate noise collection at a frequency band DS 1.

In addition, the apparatus further includes an attenuation network, and the attenuation network is disposed between an output end of the LD and an input end of the second receiver circuit. There is further the HPF 2 between the attenuation network and the second receiver circuit. The HPF 2 is configured to filter a noise leaked into the frequency band DS 1, so that a more accurate noise input to the second receiver circuit RX 2 is collected.

Further, as shown in FIG. 5, the first noise signal is denoted as $S_{N1}$, the second noise signal is denoted as $s_{N2}$, the third noise signal is denoted as $s_{N3}$, $s_{N3} = s*h_{\_Filter}$, a signal obtained after the first noise signal $s_{N1}$ is processed by the second receiver circuit is denoted as $s$, the filter coefficient is denoted as $h_{\_Filter}$, the first signal output by the adder module is denoted as $y$, $y = s_{N2} + s_{N3} = s_{N2} + s * h_{\_Filter} = 0$, and "*" represents a convolution operation in time domain, and represents a multiplication operation in frequency domain. Usually, in this embodiment of this application, "*" represents the convolution operation in time domain.

In addition, the DFE is configured to: determine the filter coefficient $h_{\_Filter}$ based on the second noise signal $S_{N2}$ output by the first receiver circuit RX 1 and the signal $s$ obtained after the first noise signal is processed by the second receiver circuit RX 2, and input the filter coefficient $h_{\_Filter}$ to the filter module. The filter module is configured to: perform, based on the filter coefficient $h_{\_Filter}$, filtering processing on the signal $s$ that passes through the second receiver circuit RX 2 to generate the third noise signal $S_{N3}$ , and output the third noise signal $s_{N3}$ to the adder module, where $s_{N3} = s * h_{\_Filter}$

The DFE may calculate a group of filter coefficients $h_{\_Filter}$ by using an output noise, namely, a TX signal, collected by a channel of the second receiver circuit RX 2 and a noise that is collected by the RX 1 and that is leaked into a normal receive channel (the first receiver circuit RX 1) after the TX signal passes through the hybrid circuit, allocate the filter coefficient to the filter module, and allocate a delay parameter to the delay module, so that a noise obtained after the noise collected by the circuit RX 2 passes through the filter module is equal in amplitude and opposite in phase to the noise that is leaked into the circuit RX 1 after the hybrid circuit is passed through. Finally, after the adder module is passed through, the noise leaked from the TX signal into the circuit RX 1 is canceled. In this way, receiving performance is improved.

The delay module is configured to match a delay relationship between the normal receive channel RX 1 and the collection channel RX 2, so that the noise signals from the normal receive channel RX 1 and the collection channel RX 2 are opposite in phase when arriving at an adder, in other words, $S_{N2} = -S_{N3}$ .

Optionally, the first receiver circuit RX 1 includes a first analog-to-digital converter ADC 1 and a first low noise amplifier LNA 1. The second receiver circuit RX 2 includes a second analog-to-digital converter ADC 2 and a second low noise amplifier LNA 2. In addition, the RX 1 and the RX 2 may further include more or fewer other functional units/modules. This is not limited in this embodiment.

According to the apparatus provided in this embodiment, the second receiver circuit is added to collect a noise signal leaked from a channel of the LD, the filter module performs filtering processing on the noise signal based on the filter coefficient, and a noise signal obtained after filtering processing and a noise collected by the first receiver circuit in the adder module are added, to cancel a noise in the first receiver circuit. In this way, an out-of-band noise is prevented from affecting downlink transmission performance. In addition, according to the method in which noise cancellation is implemented by using an echo in this embodiment, a downlink service rate is increased.

The following describes a transmission process of a signal flow based on a schematic diagram of a structure shown in FIG. 4 or FIG. 5.

FIG. 5 is used as an example. A direction of an uplink transmit signal flow is DFE -> DAC -> PGA -> LD ->. A noise signal x output from the channel of the LD includes a noise. The noise is an out-of-band noise and includes two parts. For description of the noise, refer to the foregoing description of the out-of-band noise. Details are not described herein.

In downlink transmission, the first noise signal is generated after a signal and noise output by the LD pass through the H circuit, and the first noise signal is input to the first receiver circuit RX 1. A direction of a signal flow or a signal flow of a first channel is as follows:

(1) LD -> H circuit -> HPF 1 -> LNA 1 -> ADC 1 -> D -> adder module -> DFE.

In this embodiment, a direction of a downlink signal flow corresponding to the newly added second receiver circuit RX 2 or a signal flow of a second channel is as follows:

(2) LD -> attenuation network -> HPF 2 -> LNA 2 -> ADC 2 -> filter -> adder module -> DFE.

A processing process of the signal flow (1) of the first channel is as follows:

It is assumed that the signal and noise output from the channel of the LD are x, an echo suppression characteristic of the hybrid circuit hybrid is $h_{\_Hybrid}$, a filtering feature of the HPF 1 is $h_{\_HPF1}$ , a feature of the LNA 1 is $h_{\_LNA1}$, and a feature of the ADC 1 is $h_{\_ADC1}$. In this case, there is the following relationship:

The noise signal x is input to the H circuit, and after processing is performed based on the echo suppression characteristic of the hybrid circuit, an input signal is a first noise signal $S_{N1} = x * h_{\_Hybrid}$. After the first noise signal passes through the HPF 1, an output signal is $x * h_{\_Hybrid} * h_{\_HPF1}$ , and then the output signal sequentially passes through the LNA 1 for noise amplification and the ADC 1. After processing of converting an analog signal to a digital signal, a second noise signal $S_{N2}$ is output. A relational expression is as follows: $s_{N2} = x * h_{\_Hybird} * h_{\_HPF1} * h_{\_LNA1} * h_{\_ADC1}$.

The second noise signal $S_{N2}$ passes through the delay module, and then is input to the adder module. In addition, when no filter coefficient is configured for the filter module, the second noise signal $s_{N2}$ is directly input to the DFE, in other words, the DFE may directly obtain the noise.

A processing process of the signal flow (2) of the second channel is as follows:

It is assumed that a signal and noise output from the channel of the LD are x, an attenuation characteristic of the attenuation network is $h_{\_Atte}$, a filtering feature of the HPF 2 is $h_{\_HPF2}$ , a feature of the LNA 2 is $h_{\_LNA2}$, and a feature of the ADC 2 is $h_{\_ADC2}$. In this case, there is the following relationship:

The output signal and noise x are input to the attenuation network, and after processing is performed based on the attenuation characteristic $h_{\_Atte}$, an output signal is $x * h_{\_Atte}$ . After the signal passes through the HPF 2, an output signal is $x * h_{\_Atte} * h_{\_HPF2}$ . The output signal then sequentially passes through the LNA 2 for noise amplification and the ADC 2 for analog to digital conversion, and then a signal is output. The output signal is s, and $s = x*h_{\_Atte}*h_{\_HPF2}*h_{\_LNA2}*h_{\_ADC2}$.

The ADC 2 transmits the output signal s to the DFE. The DFE receives the signal s, and may calculate a group of filter coefficients $h_{\_Filter}$ based on the obtained second noise signal $S_{N2}$, and then send the filter coefficient $h_{\_Filter}$ to the filter module.

A first input end of the filter module receives the signal $s$ output by the ADC 2, a second input end of the filter module receives the filter coefficient $h_{\_Filter}$ sent by the DFE, and then the filter module performs filtering processing on the signal $s$ by using the filter coefficient, to generate a third noise signal $S_{N3}$. A relational expression is as follows: $s_{N3} = s{*}h_{\_Filter}$, that is, $s_{N3} = s{*}h_{\_Filter} = (x * h_{\_Atte} * h_{\_HPF2} * h_{\_LNA2} * h_{\_ADC2}) * h_{\_Filter}$,

A process of performing processing by the filter module and the adder module is as follows:

In the filter module, mutual cancellation may be implemented after the third noise signal $S_{N3}$ generated after processing is performed by using the filter coefficient $h_{\_Filter}$ and the second noise signal $S_{N2}$ of the signal flow of the second channel are superimposed. Specifically, A signal superimposition processing process includes the following content:

$y = s_{N2} + s_{N3} = s_{N2} + s * h_{\_Filter} = 0$. To enable the output first signal y to approximate 0, when the filter coefficient $h_{\_Filter}$ is configured, it is expected to implement the following effect: $S_{N2} = -s_{N3}$.

That is, $x * h_{-Hybrid} * h_{-HPF1} * h_{-LNA1} * h_{-ADC1} = -(x{*}h_{-Atte} * h_{-HPF2} * h_{-LNA2} * h_{-ADC2}) * h_{-Filtrer}$.

The following filter coefficient is obtained after transformation:

$$h_{\_Filter} = -\frac{x * h_{-Hybird} * h_{-HPF1} * h_{-LNA1} * h_{-ADC1}}{x * h_{-Atte} * h_{-HPF2} * h_{-LNA2} * h_{-ADC2}}.$$

In actual configuration, each module of a system has a complex characteristic, and the filter coefficient cannot be obtained through exact division, in other words, $h_{\_Filter}$ cannot be exactly equal to

$$-\frac{x * h_{-Hybird} * h_{-HPF1} * h_{-LNA1} * h_{-ADC1}}{x * h_{-Atte} * h_{-HPF2} * h_{-LNA2} * h_{-ADC2}}$$

. Therefore, a least square method is usually used to enable the filter coefficient to approximate the target value, in other words,

$$h_{\_Filter} \approx -\frac{x * h_{-Hybird} * h_{-HPF1} * h_{-LNA1} * h_{-ADC1}}{x * h_{-Atte} * h_{-HPF2} * h_{-LNA2} * h_{-ADC2}},$$

so that the signal y output by the adder module approximates 0, to cancel the first noise signal.

The delay module (Delay) is configured to synchronize the second noise signal $s_{N2}$ and the third noise signal $S_{N3}$ obtained after filtering processing, to ensure that when determining the output signal, the adder module obtains the third noise signal $S_{N3}$ obtained after processing is performed by the filter module and the second noise signal $s_{N2}$.

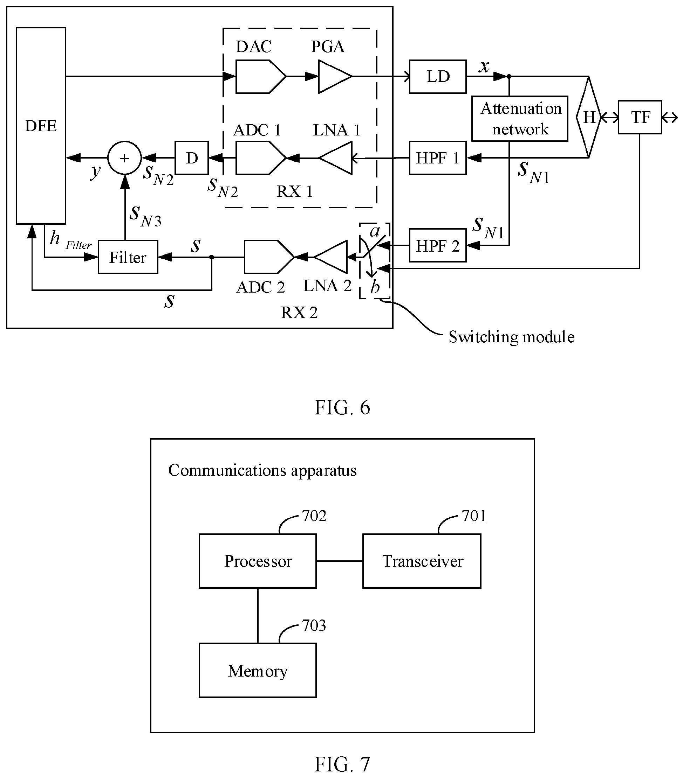

As shown in FIG. 6, the apparatus further includes a transformer (transformer, TF) and a switching module. One end of the TF is connected to the hybrid circuit H, and the TF is configured to: receive a signal/data sent by a peer end, and transmit the signal or the data to the hybrid circuit H.

The switching module includes at least two ports (or referred to as access points). In this embodiment, it is assumed that the switching module includes two ports: a first port and a second port. The first port of the switching module is connected to the output end of the LD. Further, after passing through the attenuation network and the HPF 2, the signal output by the LD is input to the LNA 2 through the first port.

The second port of the switching module is connected to the other end of the TF, and the other end of the TF receives a common mode noise on a twisted pair. An output end of the switching module is connected to the input end of the second receiver circuit RX 2. The switching module is configured to perform switching to collect the first noise signal output by the LD or the common mode noise collected by the TF on the twisted pair.

Optionally, the switching module is a switch selection circuit, the first port is a, and the second port is b. When the first port a of the switch selection circuit is connected, the LNA 2 is configured to: receive and process a noise signal output from the channel of the LD, and reduce an out-of-band noise. Specifically, for a direction of a signal flow and a processing process of a noise, refer to the description in the foregoing embodiment. Details are not described herein.

When the second port b of the switch selection circuit is connected, the LNA 2 is configured to receive and process a common mode signal from the transformer TF, to cancel a common mode noise generated on a cable, and prevent the common mode noise from affecting downlink data transmission. Further, in this case, a direction of a signal flow is as follows: TF -> LNA 2 -> ADC 2 -> Filter -> adder module -> DFE.

In this implementation, the switching module such as the switch selection circuit is added to the channel of the second receiver circuit RX 2, so that when there is an ADSL mode or a VD long-distance mode, the switch performs switching to collect a signal output by the LD and train the filter coefficient, to cancel impact of a noise output by the LD on performance of RX; and when there is another mode, the switch selection circuit performs switching to another channel to collect a common mode signal collected by the transformer, to cancel impact of a common mode noise on a cable on the performance of RX.

In addition, an embodiment of this application further provides a noise signal processing method. The method is applied to the noise signal processing apparatus. The apparatus includes a DFE, a transmitter circuit, and a first receiver circuit, and further includes a second receiver circuit, a filter module, an adder module, and a delay module. The method includes the following steps.

Step 1: The transmitter circuit receives a digital subscriber line DSL signal from the DFE, processes and amplifies the DSL signal, and outputs the signal, where the output signal includes a first noise signal, and the first noise signal flows into the first receiver circuit.

Step 2: The first receiver circuit receives the first noise signal, and the delay module performs delay processing on the first noise signal to generate a second noise signal.

Step 3: The second receiver circuit receives the first noise signal output by the transmitter circuit, and sends the first noise signal to the filter module.

Step 4: The filter module receives a filter coefficient sent by the DFE and the first noise signal sent by the second receiver circuit, performs filtering processing on the first noise signal by using the filter coefficient to obtain a third noise signal, and sends the third noise signal to the adder module.

Step 5: The adder module receives both the second noise signal and the third noise signal, adds the second noise signal and the third noise signal to obtain a first signal, and sends the first signal to the DFE.

Optionally, in a specific implementation of this embodiment, the noise signal processing apparatus further includes a digital-to-analog converter DAC, a programmable gain amplifier PGA, and a line driver LD, and the method further includes: The LD receives a signal output by the PGA, and amplifies the signal to generate the first noise signal. The signal output by the PGA is output after being sequentially processed by the DAC and the PGA.

The apparatus further includes a first high-pass filter HPF 1, a second high-pass filter HPF 2, and a hybrid circuit H, and the method further includes: The hybrid circuit H sends, to the HPF 1, the first noise signal output by the LD; the HPF 1 performs high-pass filtering on the first noise signal, and outputs the first noise signal to the first receiver circuit; and the HPF 2 receives the first noise signal, performs high-pass filtering on the first noise signal, and outputs the first noise signal to the second receiver circuit.

Optionally, in still another specific implementation of this embodiment, the method further includes: The DFE determines the filter coefficient based on a signal output by the first receiver circuit and a signal output by the second receiver circuit, and sends the filter coefficient.

Optionally, a process of obtaining the first signal in step 5 includes: The adder module adds the second noise signal and the third noise signal by using the following expression to obtain the first signal:

$$y = s_{N2} + s_{N3} = s_{N2} + s * h_{\_Filter} = 0,$$

where
the first signal is denoted as y, the second noise signal is denoted as $s_{N2}$, the third noise signal is denoted as $s_{N3}$, $s_{N3} = s * h_{\_Fiter}$, a signal obtained after the first noise signal $s_{N1}$ is processed by the second receiver circuit is denoted as $s$, and the filter coefficient is denoted as $h_{\_Filter}$.

The apparatus further includes a transformer TF and a switching module, one end of the TF is connected to the hybrid circuit H, and the method further includes: The switching module performs switching to collect the first noise signal output by the LD or a common mode noise collected by the TF on a twisted pair.

According to the method provided in this embodiment, the second receiver circuit is added to collect a noise signal leaked from a channel of the LD, the filter module performs filtering processing on the noise signal based on the filter coefficient, and a noise signal obtained after filtering processing and a noise collected by the first receiver circuit in the adder module are added, to cancel a noise in the first receiver circuit. In this way, an out-of-band noise is prevented from affecting downlink transmission performance. In addition, according to the method in which noise cancellation is implemented by using an echo in this embodiment, a downlink service rate is increased.

Further, at a specific hardware implementation level, an embodiment of this application further provides a communications apparatus, configured to implement some or all steps of the method in the foregoing embodiment. The communications apparatus in this embodiment may be the central office device in the foregoing embodiment or a user end device.

Referring to FIG. 7, the communications apparatus includes a transceiver 701, a processor 702, and a memory 703. In addition, the communications apparatus may further include more or fewer components, or combine some components, or have a different component arrangement such as a communications interface or a transmission bus. This is not limited in this application.

Specifically, the transceiver 701 is configured to establish a communications channel, so that the communications apparatus can be connected to a DSL system through the communications channel, to implement communication and transmission between end-to-end devices. Further, the transceiver 701 may include components such as a receiver, a transmitter, and an antenna, or may further include radio frequency components such as a receiver and a transmitter. Further, the radio frequency component may include at least a part of communication modules such as a wireless local area network (wireless local area network, WLAN) module, a Bluetooth module, and a baseband (baseband) module, and may include a radio frequency (radio frequency, RF) circuit corresponding to the communication module, where the radio frequency circuit is configured to perform wireless local area network communication, Bluetooth communication, infrared communication, and/or cellular communication system communication, for example, wideband code division multiple access (wideband code division multiple access, WCDMA) and/or high speed downlink packet access (high speed downlink packet access, HSDPA). In addition, the transceiver 701 is further configured to control communication between the components of the communications apparatus, and may support direct memory access (direct memory access).

The processor 702 is a control center of the communications apparatus, connects all parts of the entire hardware device by using various interfaces and lines, and performs various functions of the communications apparatus by running or executing a software program and/or a module stored in the memory 703 and invoking data stored in the memory.

Further, the processor 702 may include one or more integrated circuits (integrated circuit, IC) or chips. For example, the processor 702 may include a single packaged IC, or may include a plurality of packaged ICs that have a same function or different functions. For example, the processor may include only a CPU, or may further include a combination of a GPU, a digital signal processor (digital signal processor, DSP), and a control chip in a transceiver module.

The memory 703 is configured to store computer program code for executing the technical solutions of this application, and the processor 702 controls the execution. Further, the processor 702 is configured to execute the computer program code stored in the memory 703, to implement the method in the foregoing embodiment.

Further, the memory 703 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (Electrically Erasable Programmable Read-Only Memory, EEPROM), a compact disc read-only memory (Compact Disc Read-Only Memory, CD-ROM) or another optical disk storage, an optical disc storage (including a compressed optical disc, a laser disc, an optical disc, a digital versatile optical disc, a Blu-ray disc, or the like), a magnetic disk storage medium, or another magnetic storage device, or any other medium that can be used to carry or store expected program code in a form of an instruction or a data structure and that can be accessed by a computer. This application is not limited thereto. The memory may exist independently, or may be integrated into the processor.

Optionally, the communications apparatus may be a chip or a chip system. The chip includes the digital front end DFE, the transmitter circuit, and the first receiver circuit in the foregoing embodiment, and further includes a second receiver circuit, a filter module, an adder module, and a delay module. In addition, for a connection relationship between the modules, refer to the structures shown in FIG. 3 to FIG. 6. The communications apparatus is configured to implement the noise signal processing method in the foregoing embodiment.

In the specification, claims, and the accompanying drawings of this application, the terms "first", "second", and the like are intended to distinguish between similar objects but do not necessarily indicate a specific order or sequence. It should be understood that data termed in such a way is interchangeable in proper circumstances, so that the embodiments described herein can be implemented in other orders than the order illustrated or described herein. Moreover, the terms "include", "contain" and any other variants mean to cover non-exclusive inclusion. For example, a process, method, system, product, or device that includes a list of steps or units is not necessarily limited to those expressly listed steps or units, but may include other steps or units that are not expressly listed or inherent to the process, method, product, or device.

A person skilled in the art may clearly understand that, the technologies in the embodiments of this application may be implemented by software in addition to a necessary general hardware platform. Based on such an understanding, the technical solutions of this application essentially or the part contributing to the prior art may be implemented in a form of a software product. The software product is stored in a storage medium, such as a ROM/RAM, a magnetic disk, an optical disc and the like, and includes several instructions for instructing a computer device (which may be a personal computer, a server, a network device, or the like) to perform the methods described in the embodiments or some parts of the embodiments of the present invention.

For same or similar parts in the embodiments in this specification, refer to each other. Especially, the terminal device is basically similar to the method embodiment, and therefore is described briefly. For related parts, refer to the descriptions in the method embodiment.

The foregoing descriptions are implementations of this application, but are not intended to limit the protection scope which is defined by the claims.

**Claims**

1. A noise signal processing apparatus, comprising a digital front end, DFE, a transmitter circuit, and a first receiver circuit, wherein the transmitter circuit is configured to: receive a signal from the DFE, process and amplify the signal, and output the signal, the output signal comprises a first noise signal, and the first noise signal flows into the first receiver circuit, and

the noise signal processing apparatus further comprises a second receiver circuit, a filter module, an adder module, and a delay module, wherein
the first receiver circuit is connected to the DFE by using the delay module and the adder module, and the first noise signal is processed by the first receiver circuit and the delay module to obtain a second noise signal;

the second receiver circuit is connected to an output end of the transmitter circuit, and is configured to: receive the first noise signal output by the transmitter circuit, and send the first noise signal to the filter module;

the filter module is connected to the DFE and the second receiver circuit, and is configured to: receive a filter coefficient sent by the DFE, and perform, by using the filter coefficient, filtering processing on the first noise signal received by the second receiver circuit, to obtain a third noise signal; and

the adder module is connected to both the delay module and the filter module, and is configured to: add the received second noise signal and the received third noise signal to obtain a first signal, and send the first signal to the DFE;

wherein the transmitter circuit comprises a digital-to-analog converter, DAC, a programmable gain amplifier, PGA, and a line driver, LD, and the first noise signal is generated after a digital subscriber line, DSL,

signal output from the DFE sequentially passes through the PGA and the LD, and

the apparatus further comprises a first high-pass filter, HPF 1, a second high-pass filter, HPF 2, and a hybrid circuit, H;

the hybrid circuit H is disposed between the LD and the HPF 1, and is configured to send, to the HPF 1, the first noise signal output by the LD;

an input end of the HPF 1 is connected to the hybrid circuit H, and an output end is connected to the first receiver circuit; and

an input end of the HPF 2 is connected to the LD, and an output end is connected to the second receiver circuit; and

wherein the apparatus further comprises a transformer, TF, and a switching module, and one end of the TF is connected to the hybrid circuit, H; and

the switching module is connected between the HPF 2 and the second receiver circuit, and is configured to perform switching to collect the first noise signal output by the LD or a common mode noise collected by the TF on a twisted pair.

2. The apparatus according to claim 1, wherein the DFE determines the filter coefficient based on a signal output by the first receiver circuit and a signal output by the second receiver circuit, and sends filtering information to the filter module.

3. The apparatus according to claim 1 or 2, wherein the second noise signal is denoted as $s_{N2}$, the third noise signal is denoted as $s_{N3}$, $s_{N3} = s * h_{\_Filter}$, a signal obtained after the first noise signal $s_{N1}$ is processed by the second receiver circuit is denoted as $s$, and the filter coefficient is denoted as $h_{\_Filter}$; and

the first signal output by the adder module is denoted as y, wherein

$$y = s_{N2} + s_{N3} = s_{N2} + s * h_{\_Filter} = 0$$ .

4. A noise signal processing method, wherein the method is applied to a noise signal processing apparatus, the apparatus comprises a digital front end, DFE, a transmitter circuit, and a first receiver circuit, the transmitter circuit is configured to: receive a signal from the DFE, process and amplify the signal, and output the signal, the output signal comprises a first noise signal, the first noise signal flows into the first receiver circuit, the apparatus further comprises a second receiver circuit, and the method comprises:

receiving, by the first receiver circuit, the first noise signal, and performing delay processing on the first noise signal to generate a second noise signal;

receiving, by the second receiver circuit, the first noise signal output by the transmitter circuit, and performing filtering processing on the first noise signal to obtain a third noise signal, wherein a filter coefficient used in the filtering processing is sent by the DFE; and

adding the second noise signal and the third noise signal to obtain a first signal, and sending the first signal to the DFE,

wherein the noise signal processing apparatus further comprises a digital-to-analog converter, DAC, a programmable gain amplifier, PGA, and a line driver, LD, and the method further comprises:

receiving, by the LD, a signal output by the PGA, and amplifying the signal to generate the first noise signal, wherein the signal output by the PGA is output after being sequentially processed by the DAC and the PGA, and

the apparatus further comprises a first high-pass filter, HPF 1, a second high-pass filter, HPF 2, and a hybrid circuit, H, and the method further comprises:

sending, by the hybrid circuit H to the HPF 1, the first noise signal output by the LD, and performing, by the HPF 1, high-pass filtering on the first noise signal, and outputting the first noise signal to the first receiver circuit; and

receiving, by the HPF 2, the first noise signal, performing high-pass filtering on the first noise signal, and outputting the first noise signal to the second receiver circuit; and
wherein the apparatus further comprises a transformer TF and a switching module, one end of the TF is connected to the hybrid circuit H, and the method further comprises:
performing switching, by the switching module, to collect the first noise signal output by the LD or a common mode noise collected by the TF on a twisted pair.

5. The method according to claim 4, wherein the method further comprises:
determining, by the DFE, the filter coefficient based on a signal output by the first receiver circuit and a signal output by the second receiver circuit, and sending the filter coefficient.

6. The method according to claim 4 or 5, wherein the obtaining a first signal comprises:

adding the second noise signal and the third noise signal by using the following expression to obtain the first signal:

$$y = s_{N2} + s_{N3} = s_{N2} + s * h_{\_Filter} = 0,$$

wherein
the first signal is denoted as y, the second noise signal is denoted as $s_{N2}$, the third noise signal is denoted as $s_{N3}$, $s_{N3} = s * h_{\_Filter}$, a signal obtained after the first noise signal $s_{N1}$ is processed by the second receiver circuit is denoted as $s$, and the filter coefficient is denoted as $h_{\_Fiter}$

7. A communications apparatus, comprising a processor (702), wherein the processor (702) is coupled to a memory (703), wherein

the memory (703) is configured to store instructions; and
the processor (702) is configured to execute the instructions in the memory (703), to enable the communications apparatus to perform the method according to any one of claims 4 to 6.

**Patentansprüche**

1. Rauschsignalverarbeitungsvorrichtung, die ein digitales Front-End, DFE, eine Transmitterschaltung und eine erste Empfängerschaltung umfasst, wobei die Transmitterschaltung konfiguriert ist zum: Empfangen eines Signals von dem DFE, Verarbeiten und Verstärken des Signals und Ausgeben des Signals, wobei das Ausgangssignal ein erstes Rauschsignal umfasst und das erste Rauschsignal in die erste Empfängerschaltung fließt, und

die Rauschsignalverarbeitungsvorrichtung ferner eine zweite Empfängerschaltung, ein Filtermodul, ein Addiermodul und ein Verzögerungsmodul umfasst, wobei die erste Empfängerschaltung mit dem DFE durch Verwenden des Verzögerungsmoduls und des Addiermoduls verbunden ist, und das erste Rauschsignal durch die erste Empfängerschaltung und das Verzögerungsmodul verarbeitet wird, um ein zweites Rauschsignal zu erhalten;
die zweite Empfängerschaltung mit einem Ausgangsende der Transmitterschaltung verbunden ist und konfiguriert ist zum: Empfangen des ersten Rauschsignals, das durch die Transmitterschaltung ausgegeben wird, und Senden des ersten Rauschsignals an das Filtermodul;
das Filtermodul mit dem DFE und der zweiten Empfängerschaltung verbunden ist und konfiguriert ist zum: Empfangen eines Filterkoeffizienten, der durch das DFE gesendet wird und Durchführen einer Filterverarbeitung an dem ersten Rauschsignal, das durch die zweite Empfängerschaltung empfangen wird, um ein drittes Rauschsignal zu erhalten; und das Addiermodul sowohl mit dem Verzögerungsmodul als auch mit dem Filtermodul verbunden ist und konfiguriert ist zum: Addieren des empfangenen zweiten Rauschsignals und des empfangenen dritten Rauschsignals, um ein erstes Signal zu erhalten, und Senden des ersten Signals an das DFE;
wobei die Transmitterschaltung einen Digital-Analog-Wandler, DAC, einen programmierbaren Zugewinnverstärker, PGA, und einen Leitungstreiber, LD, umfasst und das erste Rauschsignal erzeugt wird, nachdem ein Signal einer digitalen Teilnehmeranschlussleitung, DSL, das von dem DFE ausgegeben wird, durch den PGA und den LD sequenziell durchläuft, und
die Vorrichtung ferner ein erstes Hochpassfilter, HPF 1, ein zweites Hochpassfilter, HPF 2, und eine Hybridschaltung, H, umfasst;
die Hybridschaltung H zwischen dem LD und dem HPF 1 eingerichtet ist und konfiguriert ist zum: Senden, an das HPF 1, des ersten Rauschsignals, das durch den LD ausgegeben wird;
ein Eingangsende des HPF 1 mit der Hybridschaltung H verbunden ist und ein Ausgangsende mit der ersten Empfängerschaltung verbunden ist; und

ein Eingangsende des HPF 2 mit dem LD verbunden ist und ein Ausgangsende mit der zweiten Empfängerschaltung verbunden ist; und wobei die Vorrichtung ferner einen Transformator, TF, und ein Schaltmodul umfasst, und ein Ende des TF mit der Hybridschaltung H verbunden ist; und

das Schaltmodul zwischen dem HPF 2 und der zweiten Empfängerschaltung verbunden ist und konfiguriert ist, um ein Umschalten durchzuführen, um das erste Rauschsignal, das durch den LD ausgegeben wird, oder ein Gleichtaktrauschen, das durch den TF auf einem verdrillten Leitungspaar erfasst wird, zu erfassen.

2. Vorrichtung nach Anspruch 1, wobei das DFE den Filterkoeffizienten basierend auf einem Signal, das durch die erste Empfängerschaltung ausgegeben wird, und einem Signal, das durch die zweite Empfängerschaltung ausgegeben wird, bestimmt, und Filterinformationen an das Filtermodul sendet.

3. Vorrichtung nach Anspruch 1 oder 2, wobei das zweite Rauschsignal als $s_{N2}$, bezeichnet wird, das dritte Rauschsignal als $s_{N3}$, $s_{N3} = s * h_{\_Filter}$ bezeichnet wird, ein Signal, das nach dem ersten Rauschsignal $s_{N1}$ erhalten wird, durch die zweite Empfängerschaltung verarbeitet wird, als $s$ bezeichnet wird, und der Filterkoeffizient als $h_{\_Filter}$ bezeichnet wird; und

das erste Signal, das durch das Addiermodul ausgegeben wird als y bezeichnet wird, wobei

$$y = s_{N2} + s_{N3} = s_{N2} + s * h_{\_Filter} = 0 \ .$$

4. Rauschsignalverarbeitungsverfahren, wobei das Verfahren auf eine Rauschsignalverarbeitungsvorrichtung angewendet wird, die Vorrichtung ein digitales Frontend, DFE, eine Transmitterschaltung und eine erste Empfängerschaltung umfasst, die Transmitterschaltung konfiguriert ist zum: Empfangen eines Signals von dem DFE, Verarbeiten und Verstärken des Signals und Ausgeben des Signals, wobei das Ausgangssignal ein erstes Rauschsignal umfasst, das erste Rauschsignal in die erste Empfängerschaltung fließt, die Vorrichtung ferner eine zweite Empfängerschaltung umfasst, und das Verfahren umfasst:

Empfangen, durch die erste Empfängerschaltung, des ersten Rauschsignals und Durchführen einer Verzögerungsverarbeitung an dem ersten Rauschsignal, um ein zweites Rauschsignal zu erzeugen;
Empfangen, durch die zweite Empfängerschaltung, des ersten Rauschsignals, das durch die Transmitterschaltung ausgegeben wird, und Durchführen einer Filterverarbeitung an dem ersten Rauschsignal, um ein drittes Rauschsignal zu erhalten, wobei ein Filterkoeffizient, der bei der Filterverarbeitung verwendet wird, durch das DFE gesendet wird; und Addieren des zweiten Rauschsignals und des dritten Rauschsignals, um ein erstes Signal zu erhalten, und Senden des ersten Signals an das DFE, wobei die Rauschsignalverarbeitungsvorrichtung ferner einen Digital-Analog-Wandler, DAC, einen programmierbaren Zugewinnverstärker, PGA, und einen Leitungstreiber, LD, umfasst und das Verfahren ferner umfasst:

Empfangen, durch den LD, eines Signals, das durch den PGA ausgegeben wird, und Verstärken des Signals, um das erste Rauschsignal zu erzeugen, wobei das Signal, das durch den PGA ausgegeben wird, nachdem es durch den DAC und den PGA sequenziell verarbeitet wurde, ausgegeben wird, und
die Vorrichtung ferner ein erstes Hochpassfilter, HPF 1, ein zweites Hochpassfilter, HPF 2, und eine Hybridschaltung, H, umfasst, und das Verfahren ferner umfasst:

Senden, durch die Hybridschaltung H an das HPF 1, des ersten Rauschsignals, das durch den LD ausgegeben wird, und Durchführen, durch das HPF 1, einer Hochpassfilterung an dem ersten Rauschsignal und Ausgeben des ersten Rauschsignals an die erste Empfängerschaltung; und Empfangen, durch das HPF 2, des ersten Rauschsignals, Durchführen einer Hochpassfilterung des ersten Rauschsignals und Ausgeben des ersten Rauschsignals an die zweite Empfängerschaltung; und
wobei die Vorrichtung ferner einen Transformator TF und ein Schaltmodul umfasst, ein Ende des TF mit der Hybridschaltung H verbunden ist, und das Verfahren ferner umfasst: Durchführen eines Umschaltens durch das Schaltmodul, um das erste Rauschsignal, das durch den LD ausgegeben wird, oder ein Gleichtaktrauschen, das durch den TF auf einem verdrillten Leitungspaar erfasst wird, zu erfassen.

5. Verfahren nach Anspruch 4, wobei das Verfahren ferner umfasst:
Bestimmen, durch das DFE, des Filterkoeffizienten basierend auf einem Signal, das durch die erste Empfängerschaltung ausgegeben wird, und einem Signal, das durch die zweite Empfängerschaltung ausgegeben wird, und Senden des Filterkoeffizienten.

6. Verfahren nach Anspruch 4 oder 5, wobei das Erhalten eines ersten Signals umfasst: Addieren des zweiten Rauschsignals und des dritten Rauschsignals durch Verwenden des folgenden Ausdrucks, um das erste Signal zu erhalten:

$$y = s_{N2} + s_{N3} = s_{N2} + s * h_{\_Filter} = 0,$$

wobei

**das erste** Signal als y bezeichnet wird, das zweite Rauschsignal als $s_{N2}$ bezeichnet wird, das dritte Rauschsignal als $S_{N3}, S_{N3} = s * h_{\_Filter}$ bezeichnet wird, ein Signal, das nach dem ersten Rauschsignal $S_{N1}$, erhalten wird, durch die zweite Empfängerschaltung verarbeitet wird, als *s* bezeichnet wird, und der Filterkoeffizient als $h_{\_Filter}$ bezeichnet wird.

7. Kommunikationsvorrichtung, die einen Prozessor (702) umfasst, wobei der Prozessor (702) mit einem Speicher (703) gekoppelt ist, wobei

der Speicher (703) konfiguriert ist, um Anweisungen zu speichern; und
der Prozessor (702) konfiguriert ist, um die Anweisung in dem Speicher (703) auszuführen, um die Kommunikationsvorrichtung zu aktivieren, um das Verfahren nach einem der Ansprüche 4 bis 6 durchzuführen.

**Revendications**

1. Appareil de traitement de signal de bruit, comprenant un frontal numérique, DFE, un circuit d'émission et un premier circuit de réception, dans lequel le circuit d'émission est configuré pour : recevoir un signal du DFE, traiter et amplifier le signal, et émettre le signal, le signal de sortie comprend un premier signal de bruit, et le premier signal de bruit circule dans le premier circuit de réception, et

l'appareil de traitement de signal de bruit comprend en outre un second circuit de réception, un module de filtrage, un module additionneur et un module de retard, dans lequel
le premier circuit de réception est connecté au DFE à l'aide du module de retard et du module additionneur, et le premier signal de bruit est traité par le premier circuit de réception et le module de retard pour obtenir un deuxième signal de bruit ;
le second circuit de réception est connecté à une extrémité de sortie du circuit d'émission et est configuré pour : recevoir le premier signal de bruit émis par le circuit d'émission et envoyer le premier signal de bruit au module de filtrage ;
le module de filtrage est connecté au DFE et au second circuit de réception, et est configuré pour : recevoir un coefficient de filtrage envoyé par le DFE, et effectuer, à l'aide du coefficient de filtrage, un traitement de filtrage sur le premier signal de bruit reçu par le second circuit de réception, afin d'obtenir un troisième signal de bruit ; et le module additionneur est connecté à la fois au module de retard et au module de filtrage, et est configuré pour : additionner le deuxième signal de bruit reçu et le troisième signal de bruit reçu pour obtenir un premier signal, et envoyer le premier signal au DFE ;
dans lequel le circuit d'émission comprend un convertisseur numérique-analogique, CNA, un amplificateur à gain programmable, AGP, et un circuit d'attaque de ligne, LD, et le premier signal de bruit est généré après qu'un signal de ligne d'accès numérique, DSL, émis par le DFE a traversé séquentiellement l'AGP et le LD, et l'appareil comprend en outre un premier filtre passe-haut, HPF 1, un second filtre passe-haut, HPF 2, et un circuit hybride, H ;
le circuit hybride H est disposé entre le LD et le HPF 1, et est configuré pour envoyer, au HPF 1, le premier signal de bruit émis par le LD ;
une extrémité d'entrée du HPF 1 est connectée au circuit hybride H, et une extrémité de sortie est connectée au premier circuit de réception ; et une extrémité d'entrée du HPF 2 est connectée au LD, et une extrémité de sortie est connectée au second circuit de réception ; et
dans lequel l'appareil comprend en outre un transformateur, TF, et un module de commutation, et
une extrémité du TF est connectée au circuit hybride, H ; et
le module de commutation est connecté entre le HPF 2 et le second circuit de réception, et est configuré pour effectuer une commutation afin de collecter le premier signal de bruit émis par le LD ou un bruit de mode commun collecté par le TF sur une paire torsadée.

2. Appareil selon la revendication 1, dans lequel le DFE détermine le coefficient de filtrage sur la base d'un signal émis par le premier circuit de réception et d'un signal émis par le second circuit de réception, et envoie des informations de filtrage au module de filtrage.

3. Appareil selon la revendication 1 ou 2, dans lequel le deuxième signal de bruit est désigné comme suit $S_{N2}$, le troisième signal de bruit est désigné par $S_{N2}$,

$s_{N3} = s * h_{\_Filter}$, un signal obtenu après le premier signal de bruit $s_{N1}$ est traité par le second circuit de réception est désigné par $s$, et le coefficient de filtrage est désigné par $h_{\_Filter}$ ; et le premier signal produit par le module additionneur est désigné par y, dans lequel $y = s_{N2} + s_{N3} = s_{N2} + s * h_{\_Filtre} = 0$.

**4.** Procédé de traitement de signal de bruit, dans lequel le procédé est appliqué à un appareil de traitement de signal de bruit, l'appareil comprend un frontal numérique, DFE, un circuit d'émission, et un premier circuit de réception, le circuit d'émission est configuré pour : recevoir un signal du DFE, traiter et amplifier le signal, et émettre le signal, le signal de sortie comprend un premier signal de bruit, le premier signal de bruit s'écoule dans le premier circuit de réception, l'appareil comprend en outre un second circuit de réception, et le procédé comprend :

la réception, par le premier circuit de réception, du premier signal de bruit, et le fait d'effectuer un traitement de retard sur le premier signal de bruit pour générer un deuxième signal de bruit ;
la réception, par le second circuit de réception, du premier signal de bruit émis par le circuit d'émission, et le fait d'effectuer un traitement de filtrage sur le premier signal de bruit pour obtenir un troisième signal de bruit, dans lequel un coefficient de filtre utilisé dans le traitement de filtrage est envoyé par le DFE ; et l'ajout du deuxième signal de bruit et du troisième signal de bruit pour obtenir un premier signal, et l'envoi du premier signal au DFE,
dans lequel l'appareil de traitement de signal de bruit comprend en outre un convertisseur numérique-analogique, CNA, un amplificateur à gain programmable, PGA, et un circuit d'attaque de ligne, LD, et le procédé comprend en outre :

la réception, par le LD, d'un signal émis par le PGA, et l'amplification du signal pour générer le premier signal de bruit, dans lequel le signal émis par le PGA est émis après avoir été traité séquentiellement par le CNA et le PGA, et
l'appareil comprend en outre un premier filtre passe-haut, HPF 1, un second filtre passe-haut, HPF 2, et un circuit hybride, H, et le procédé comprend en outre :

l'envoi, par le circuit hybride H au HPF 1, du premier signal de bruit émis par le LD, et le fait d'effectuer, par le HPF 1, un filtrage passe-haut sur le premier signal de bruit, et l'émission du premier signal de bruit vers le premier circuit de réception ; et
la réception, par le HPF 2, du premier signal de bruit, le fait d'effectuer un filtrage passe-haut sur le premier signal de bruit, et la sortie du premier signal de bruit vers le second circuit de réception ; et

dans lequel l'appareil comprend en outre un transformateur TF et un module de commutation, une extrémité du transformateur TF est connectée au circuit hybride H, et le procédé comprend en outre :
le fait d'effectuer une commutation, par le module de commutation, pour collecter le premier signal de bruit émis par le LD ou un bruit de mode commun collecté par le TF sur une paire torsadée.

**5.** Procédé selon la revendication 4, dans lequel le procédé comprend en outre :
la détermination, par le DFE, du coefficient de filtrage sur la base d'un signal émis par le premier circuit de réception et d'un signal émis par le second circuit de réception, et l'envoi du coefficient de filtrage.

**6.** Procédé selon la revendication 4 ou 5, dans lequel l'obtention d'un premier signal comprend :

l'ajout du deuxième signal de bruit et le troisième signal de bruit à l'aide de l'expression suivante pour obtenir le premier signal :

$$Y = s_{N2} + s_{N3} = s_{N2} + s * h_{\_Filtre} = 0,$$

dans lequel
le premier signal est noté y, le deuxième signal de bruit est noté $s_{N2}$, le troisième signal de bruit est noté $s_{N3}$, $s_{N3} = s * h_{\_Filtre}$, un signal obtenu après le premier signal de bruit $s_{N1}$ est traité par le second circuit de réception est noté $s$, et le coefficient de filtrage est désigné par $h_{\_Filtre}$.

**7.** Appareil de communications, comprenant un processeur (702), dans lequel le processeur (702) est couplé à une mémoire (703), dans lequel

la mémoire (703) est configurée pour stocker des instructions ; et
le processeur (702) est configuré pour exécuter les instructions dans la mémoire (703), pour faire en sorte que l'appareil de communications effectue le procédé selon l'une quelconque des revendications 4 à 6.

FIG. 1

dBm

Uplink US 0 | Downlink DS 1 | Uplink US 1 | Downlink DS 2 | Uplink US 2 | Downlink DS 3

25 K    138 K        3.75 M        5.2 M        8.5 M        12 M                    35 M

f (Hz)

FIG. 2

DSL signal

DFE

First signal

Second noise signal

Transmitter circuit

Output signal

D

First receiver circuit

First noise signal

+

Third noise signal

Filter

Second receiver circuit

First noise signal

Filter coefficient h

FIG. 3

Analog front end AFE

Hybrid circuit
hybrid

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910754724
- EP 3185429 A1

- US 6856684 B1